# DEMANDE DE BREVET EUROPEEN

(11) **EP 2 299 077 A1**
(43) Date de publication de la demande: **23.03.2011**
(21) Numéro de dépôt: 10173111.5
(22) Date de dépôt: 17.08.2010
(51) Int. Cl.: F01N 3/20, B67D 7/02

(54) **Réservoir souple pour produit additif**

(30) Priorité: 27.08.2009 FR 0955837; 13.10.2009 FR 0957139
(71) Demandeur: MGI COUTIER, 01410 Champfromier (FR)
(72) Inventeur: Novellani, Marc, 84850, Travaillan (FR); Comtat, Didier, 84170, Monteux (FR)
(74) Mandataire: Maureau, Philippe

(57) **Abrégé**

Ce réservoir d'additif liquide (4) comprend un carter rigide (13) délimitant un logement, et une poche souple (14) étanche montée dans le logement du carter et destinée à contenir l'additif liquide, la poche souple étant agencée pour être reliée à la ligne d'échappement (6) d'un moteur à combustion interne (3) d'un véhicule.

## Description

La présente invention concerne un réservoir d'additif liquide pour système de réduction catalytique sélective, un système de réduction catalytique sélective comportant un tel réservoir et un procédé de remplissage d'un tel réservoir.

Les normes visant à limiter les émissions de polluants générés par les véhicules automobiles sont de plus en plus contraignantes, et obligent sans cesse les constructeurs automobiles à faire évoluer leurs technologies pour s'y conformer. De telles normes prévoient entre autres une diminution des rejets d'oxydes d'azote (NOx) dans l'atmosphère.

Afin de limiter les émissions d'oxydes d'azote, les constructeurs automobiles recourent de plus en plus au système de traitement SCR (Selective Catalytic Reduction) qui permet la réduction des oxydes d'azote par le biais d'un réducteur, tel que de l'ammoniac, dans la ligne d'échappement du moteur à combustion interne du véhicule. Cet ammoniac provient généralement de la décomposition par thermolyse d'une solution aqueuse d'urée, par exemple de l'AdBlue ®, injectée directement dans la ligne d'échappement. Cette solution aqueuse d'urée peut être enrichie de différents constituants, tels que du formate d'ammonium comme c'est le cas pour le Denoxium ®.

Un système de traitement SCR comprend de façon connue un réservoir contenant une solution aqueuse d'urée fixé sur le véhicule, un filtre à NOx situé sur la ligne d'échappement, et un dispositif d'injection de solution aqueuse d'urée relié au réservoir et agencé pour injecter la solution d'urée dans la ligne d'échappement du moteur en amont du filtre à NOx.

Dans un tel système, la solution aqueuse d'urée injectée dans la ligne d'échappement est convertie en ammoniac du fait de la température importante régnant dans cette dernière. L'ammoniac ainsi obtenu réagit alors, dans le filtre à NOx, avec les oxydes d'azote issus de la combustion du moteur de telle sorte que ces derniers sont transformés par réduction catalytique en azote, sans danger pour l'environnement, et en vapeur d'eau.

Le réservoir d'un tel système de traitement SCR est communément constitué d'une coque monobloc rigide ou de deux demi-coquilles rigides assemblées l'une à l'autre, et est généralement équipé d'un clapet de mise à l'air permettant de compenser les variations de pression à l'intérieur du réservoir liées notamment à la dilatation, à l'évaporation et au puisage de la solution contenue dans ce dernier.

Un tel réservoir implique un nombre important d'inconvénients.

En effet, le clapet de mise à l'air du réservoir est susceptible de relarguer des vapeurs d'ammoniac et de la vapeur d'eau, soit en raison d'une étanchéité imparfaite de ce clapet, soit tout simplement lors d'une montée en pression du réservoir au-delà de la valeur de tarage du clapet, par exemple en plein été lorsqu'il est exposé à des températures chaudes générant la formation de vapeurs d'ammoniac et d'eau.

De tels dégazages d'une part polluent l'environnement puisqu'ils comportent de l'ammoniac, et d'autre part modifient la concentration de la solution aqueuse d'urée, ce qui peut perturber et dégrader le fonctionnement du système de traitement SCR.

En outre, en séchant, la solution d'urée génère des dépôts solides, notamment d'urée. Ces dépôts peuvent se former au niveau du clapet de mise à l'air et provoquer un blocage de ce dernier en position ouverte (avec dans ce cas des pertes par vaporisation très importantes) ou en position fermée. Un tel blocage en position fermée du clapet de mise à l'air empêcherait un puisage de la solution d'urée dans le réservoir ou entraînerait une casse de ce dernier sous l'effet de son écrasement.

La présence d'un clapet de mise à l'air rend également difficile la livraison d'un tel réservoir pré-rempli du fait des risques de fuite.

La géométrie d'un tel récipient doit être déterminée de manière précise afin d'éviter, par exemple lorsque le véhicule est incliné ou en mouvement, les risques d'aspiration d'air au lieu de la solution d'urée notamment lorsque le réservoir a été en partie vidé. Il en résulte que les possibilités de géométrie d'un tel récipient sont limitées et que le volume de fluide utile (qui sera consommé à coup sûr sans générer de problèmes de réaspiration d'air notamment) est faible par rapport au volume du réservoir total et à l'espace disponible sur le véhicule pour accueillir ce réservoir. Il est par conséquent malaisé d'implanter sur un véhicule un réservoir d'un volume utile important, ce qui est pénalisant pour l'utilisateur du véhicule qui doit conserver à disposition une réserve d'additif liquide ou ramener prématurément son véhicule en concession.

De plus, le jaugeage d'un tel réservoir est peu précis, notamment du fait de la géométrie complexe du réservoir, et onéreux. Le jaugeage d'un tel réservoir peut notamment être influencé par les phénomènes de mise en pression/dépression du réservoir liés aux pressions d'ouverture du clapet de mise à l'air.

Il convient de noter que les systèmes de traitement SCR actuels fonctionnent majoritairement avec une solution d'urée (AdBlue ®) qui gèle autour de -11°C. Cette particularité nécessite de prévoir des moyens de chauffage du réservoir, voire des moyens de chauffage des circuits d'alimentation en solution d'urée. En outre, afin de limiter les risques de gel de la solution d'urée, de nombreux constructeurs prévoient un circuit de purge évitant le gel de la solution d'urée dans les canalisations en phase d'arrêt du véhicule. Ces dispositions augmentent de façon importante les coûts de fabrication du système de traitement SCR.

La présente invention vise à remédier à tout ou partie de ces inconvénients.

A cet effet, l'invention concerne un réservoir d'additif liquide pour système de réduction catalytique sélective destiné au traitement des gaz d'échappement d'un moteur à combustion interne d'un véhicule, **caractérisé en ce qu**'il comprend un carter rigide délimitant un logement, et une poche souple étanche montée dans le logement du carter et destinée à contenir l'additif liquide, la poche souple étant agencée pour être reliée à la ligne d'échappement du moteur.

Au fur et à mesure de la consommation d'additif liquide, la poche souple se déforme de manière à réduire son volume intérieur. De ce fait, le réservoir selon l'invention ne nécessite pas de système de mise à l'air classique, et n'implique donc pas les inconvénients inhérents à ce système de mise à l'air mentionnés précédemment, la poche souple étant initialement remplie sans air et restant ainsi exempte d'air tout au long de sa vie sur véhicule.

Avantageusement, la poche souple est montée de manière amovible dans le carter rigide. De ce fait, une fois vide, la poche souple peut être retirée rapidement et facilement du carter souple, et être remplacée par une nouvelle ou être remplie.

La poche souple est de préférence réalisée en matière thermoplastique par moulage par soufflage. De par la liberté de géométrie qu'offre la technique de moulage par soufflage et l'absence de contraintes de géométrie liées aux risques d'aspiration d'air (du fait de l'absence d'air dans la poche souple), il est aisé de réaliser un réservoir susceptible d'occuper efficacement le volume disponible sur le véhicule, et donc d'implanter un réservoir de volume important par exemple en sous-caisse du véhicule. Il est par conséquent possible d'aligner la fréquence de remplissage de la poche souple sur les visites de maintenance du véhicule, évitant ainsi à l'utilisateur de disposer d'une réserve d'additif liquide ou de ramener prématurément son véhicule en concession.

Il convient de noter que les rendements d'architecture (correspondants au volume de fluide embarqué utile par rapport au volume disponible sur véhicule) peuvent descendre jusqu'à 50% environ pour des réservoirs rigides classiques, alors qu'avec les mêmes volumes alloués, ils atteignent entre 75 et 90% avec des réservoirs selon l'invention.

Il convient également de préciser qu'un tel réservoir d'additif liquide comprenant un carter rigide délimitant un logement dans lequel est montée une poche souple étanche réalisée en matière thermoplastique par moulage par soufflage pourrait être utilisé comme réservoir d'additif pour filtre à particules. Dans ce cas de figure, la poche souple ne serait pas agencée pour être reliée à la ligne d'échappement du moteur mais pour être reliée au réservoir à carburant du véhicule ou à la ligne d'alimentation en carburant du moteur.

En outre, la technique de moulage par soufflage permet la réalisation de réservoirs minces et de grande surface difficilement réalisables sous forme rigide, de manière à pouvoir implanter aisément ces derniers dans des logements spécifiques du véhicule, par exemple sous-caisse ou en remplacement de la roue de secours dans le coffre, etc.

Cette liberté de géométrie permet également de disposer beaucoup plus simplement plusieurs réservoirs sur le véhicule, qui peuvent soit alimenter un réservoir principal, soit alimenter en parallèle ou en série directement une pompe couplée à une ligne d'alimentation en additif liquide d'un système SCR.

Selon une alternative de réalisation, la poche souple pourrait être réalisée à partir de deux films souples soudés l'un à l'autre. Avantageusement, les films souples sont réalisés en polyuréthane thermoplastique (TPU). Préférentiellement, les films souples sont soudés l'un à l'autre par thermosoudage. La poche souple peut éventuellement comporter une pièce en matière plastique déformable disposée entre les deux films souples et agencée pour conférer à la poche souple sa forme tridimensionnelle.

Selon une autre alternative de réalisation, la poche souple pourrait être réalisée à partir de deux demi-coquilles souples soudées l'une à l'autre, les deux demi-coquilles étant réalisées par exemple par injection ou thermoformage. Une tel mode de réalisation de la poche souple permet de faciliter l'introduction de dispositifs particuliers à l'intérieur de la poche, tels qu'un plongeur permettant de puiser l'additif liquide dans une région précise de la poche. De préférence, les deux demi-coquilles souples sont soudées l'une à l'autre par thermosoudage.

L'additif liquide est avantageusement un agent réducteur liquide adapté pour réduire les NOx présents dans les gaz d'échappement du moteur à combustion interne, tel qu'une solution aqueuse d'urée, par exemple de l'AdBlue ® ou du Denoxium ®. Le Denoxium ®, notamment grâce à la présence de formate d'ammonium permet de repousser le point de gel de la solution d'urée à -30°C, ce qui permet de s'affranchir dans la majorité des cas de tout système de chauffage et peut également permettre de supprimer l'opération de purge des canalisations en phase d'arrêt du véhicule.

Dans le cas d'une utilisation de l'AdBlue ® comme agent réducteur, plusieurs options sont possibles.

Un réchauffement de la poche souple est envisageable via par exemple des résistances chauffantes localisées dans le carter sous la poche. Le circuit de retour gasoil est également utilisable pour réchauffer la poche qui reposerait par exemple sur ce circuit de retour qui pourrait adopter une géométrie en serpentin afin d'optimiser la longueur en contact avec la poche et donc le réchauffement de cette dernière.

Néanmoins, une solution plus aisée peut consister à disposer d'un réservoir secondaire associé à des moyens de chauffage. Il pourra par exemple s'agir d'une seconde poche souple de faible contenance beaucoup plus facile à réchauffer que le réservoir principal. Il pourra également s'agir d'un réservoir rigide classique mais de petit volume (pouvant être standard afin de minimiser les coûts et de ne gérer qu'une diversité sur le réservoir principal) et de conception simple. Ces réservoirs secondaires pourront par exemple permettre à l'utilisateur de rouler quelques milliers de kilomètres en cas de gel du réservoir principal. Ces réservoirs secondaires sont réalimentés par le/les réservoirs principaux dès que la température de ces derniers permet le dégel de l'agent réducteur. A l'arrêt du véhicule, ce réservoir secondaire devra rester rempli afin de pouvoir alimenter le circuit d'alimentation en agent réducteur au moment du démarrage qui déclenchera le réchauffage de ce réservoir. Bien entendu dans le cas d'un réservoir secondaire rigide, ce réservoir devra permettre, de par sa conception, d'absorber la dilatation du fluide en phase de gel.

Dans le cas d'une utilisation combinée d'un réservoir d'additif liquide pour système de réduction catalytique sélective et d'un réservoir d'additif pour filtre à particules (FAP), une configuration optimale consiste à loger dans un carter rigide unique une poche souple destinée à contenir le réducteur SCR et une poche souple destinée à recevoir l'additif FAP. Cette configuration optimise fortement l'intégration du système de dépollution en un module unique avec un rendement d'architecture fortement optimisé, un carter unique assurant la fixation sur le véhicule. Une cloison interne au carter peut éventuellement délimiter le compartiment destiné à accueillir la poche SCR et celui destiné à accueillir la poche FAP de manière à éviter un contact entre les deux poches. Une petite trappe (vissée, clipée, montée sur charnières, ou fixée et ouverte par tout autre système) pourra être intégrée au carter de manière à permettre éventuellement le renouvellement de la poche FAP. Les dispositifs de pompage des fluides SCR et FAP peuvent également être intégrés dans ce carter unique et assemblés par clipage, système de queue d'aronde ou tout autre mode de fixation.

La poche souple est avantageusement réalisée en polyuréthane thermoplastique (TPU), de préférence à base éther ou carbonate, en polyéthylène, en polypropylène, ou en un polyamide thermoplastique.

Selon une variante de réalisation de l'invention, la poche souple présente une épaisseur variable. La poche souple pourrait par exemple présenter une première portion de paroi et une seconde portion de paroi, la première portion de paroi présentant une épaisseur supérieure à celle de la seconde portion de paroi de telle sorte que la première portion est indéformable ou déformable uniquement lorsque la quantité d'additif liquide à l'intérieur de la poche est très faible.

Selon une variante de réalisation de l'invention, la poche souple comporte une paroi multicouches. A titre d'exemple, il est envisageable que la poche souple dispose d'une couche interne permettant d'optimiser la résistance à l'agent réducteur contenu dans la poche et une minimisation de la migration de ce dernier dans l'épaisseur de la poche et une couche externe procurant la souplesse nécessaire à la poche et la résistance à l'environnement extérieur. La multiplication des couches peut également être motivée par une réduction du coût.

De façon préférentielle, le carter est réalisé par moulage par soufflage simultanément à la poche souple.

De façon avantageuse, la poche souple comporte un goulot équipé de moyens de raccordement à une ligne d'alimentation en additif liquide du système de réduction catalytique sélective.

De préférence, le goulot de la poche souple est disposé dans la partie inférieure de la poche. Dans l'hypothèse d'un soufflage du carter avec la poche souple, il est possible d'intégrer au goulot un pas de vis ou un profil comprenant un bossage pour permettre un vissage ou un montage facile d'un raccordement. Avantageusement, la poche souple comprend dans sa partie supérieure un renflement agencé pour piéger d'éventuelles vapeurs d'additif liquide (vapeurs d'ammoniac, vapeurs d'eau, ...). De préférence, la poche souple comprend dans sa partie supérieure une pente agencée pour diriger les éventuelles vapeurs d'additif liquide vers le renflement.

Selon une variante de réalisation de l'invention, la poche souple comprend une conduite d'aspiration d'additif liquide intégrée de manière étanche au goulot de la poche souple ou traversant de manière étanche le goulot de la poche souple, l'extrémité de la conduite située à l'intérieur de la poche souple étant disposée à proximité du fond de la poche souple. Ces dispositions permettent d'assurer une aspiration de l'additif liquide quelle que soit la quantité d'additif liquide contenue dans la poche souple, y compris dans le cas où, sous l'effet de la température, un peu de vapeur (d'eau, d'ammoniac, ...) se formerait et se positionnerait en partie haute de la poche. Ces dispositions permettent également une plus grande liberté sur le positionnement du goulot.

Avantageusement, la poche souple comprend dans sa partie inférieure un puits destiné à former une réserve d'additif liquide. De préférence, l'extrémité de la conduite d'aspiration située à l'intérieur de la poche souple est disposée dans le puits.

De préférence, les moyens de raccordement comportent un clapet auto-obturant ou un robinet de fermeture.

Selon un mode de réalisation de l'invention, le réservoir comprend des moyens de compression agencés pour exercer une pression sur la poche souple, les moyens de compression comportant de préférence un ressort de compression. Cette compression maintient une pression à l'intérieur de la poche qui va limiter la génération de vapeurs. Le design de la poche et du ressort (course, raideur) devront assurer une compression suffisante quel que soit le volume de fluide dans la poche.

Selon un mode de réalisation, le carter délimite un premier logement dans lequel est montée au moins la poche souple et un second logement dans lequel est monté un réservoir d'additif pour filtre à particules.

La présente invention concerne également un système de réduction catalytique sélective destiné au traitement des gaz d'échappement d'un moteur à combustion interne d'un véhicule, **caractérisé en ce qu**'il comprend un réservoir selon l'invention.

De préférence, le système de réduction catalytique sélective comprend en outre :
- une ligne d'alimentation en additif liquide agencée pour relier la poche souple à la ligne d'échappement du moteur,
- un dispositif d'injection couplé à la ligne d'alimentation et agencé pour injecter l'additif liquide dans la ligne d'échappement du moteur, et
- un catalyseur à réduction catalytique sélective.

Avantageusement, le système de réduction catalytique sélective comprend une pompe couplée à la ligne d'alimentation et agencée pour amener l'additif liquide de la poche souple vers la ligne d'échappement du moteur. La pompe et sa carte électronique de pilotage peuvent alors soit être intégrées au carter du réservoir, carter qui comportera des interfaces de fixation appropriées (clips, queue d'aronde, ...), soit être déportées en un autre point de la ligne d'alimentation.

Selon une variante de réalisation de l'invention, la pompe peut également être couplée avec le dispositif d'injection (technologie injecteur/pompe).

La présente invention concerne en outre un procédé de remplissage d'un réservoir selon l'invention, **caractérisé en ce qu**'il comprend les étapes consistant à :
- relier la poche souple à une ligne de remplissage en additif liquide,
- remplir la poche souple d'additif liquide,
- mesurer la pression à l'intérieur de la poche souple ou dans la ligne de remplissage,
- dévier vers une ligne de purge la totalité de l'additif liquide fourni par la ligne de remplissage, lorsque la pression mesurée atteint une valeur de seuil prédéterminée.

Ces dispositions permettent de parfaitement contrôler le remplissage de la poche souple (c'est-à-dire la quantité d'additif liquide introduit dans celle-ci), et notamment d'éviter un sur-remplissage de cette dernière et sa dégradation ou la dégradation de son carter de protection. Un tel contrôle de la quantité d'additif liquide introduit dans la poche souple permet par la suite de jauger précisément à chaque instant la quantité d'additif liquide à l'intérieur de la poche souple, notamment dans la perspective privilégiée de réaliser un jaugeage numérique via la pompe ou le dispositif d'injection. En effet, partant d'une quantité de fluide parfaitement connue lors du remplissage, à titre d'exemple, le nombre de tours d'une pompe volumétrique ou le temps d'ouverture d'un injecteur peuvent permettre de remonter à la quantité de fluide consommée, donc à la quantité de fluide restant dans la poche. Ce principe de jaugeage numérique s'avère en général plus précis et/ou moins onéreux que d'autres systèmes utilisés classiquement, notamment pour des architectures envisagées telles que des réservoirs plats ou de géométries particulièrement complexes.

Ce type de jaugeage est donc privilégié car offrant une précision en général très satisfaisant pour un surcoût très faible. Le fait de disposer d'un jaugeage précis est très important car il permet :
- d'embarquer la quantité de fluide juste nécessaire et de ne pas prévoir de volume supplémentaire pour absorber une imprécision éventuelle du jaugeage ;
- d'être averti précisément de l'atteinte d'un niveau minimum imposé par la réglementation, qui déclenche l'alerte auprès du conducteur et la nécessité pour ce dernier de faire procéder à un remplissage.

En outre, ces dispositions permettent notamment aux concessions de gérer des fûts d'additif liquide de grand volume et non pas des bidons pré-remplis au volume de remplissage nominal de la poche souple. En supprimant toute opération de remplissage manuelle, ces dispositions réduisent très fortement tout risque de pollution de l'agent réducteur en phase de remplissage.

Avantageusement, le procédé de remplissage comprend une étape consistant à prévoir un clapet de décharge entre la ligne de purge et la ligne de remplissage, le clapet de décharge étant mobile entre une position de fermeture dans laquelle la ligne de purge et la ligne de remplissage sont isolées fluidiquement afin de permettre le remplissage de la poche souple et une position d'ouverture dans laquelle la ligne de purge et la ligne de remplissage sont reliées fluidiquement, le clapet étant conçu pour être déplacé automatiquement dans sa position d'ouverture lorsque la pression à l'intérieur de la poche souple ou dans la ligne de remplissage atteint la valeur de seuil prédéterminée.

Ainsi, lorsque la poche souple est remplie à son volume nominal, la pression dans cette dernière augmente du fait de la résistance opposée par la matière à son étirement, ce qui provoque un déplacement du clapet de décharge dans sa position d'ouverture et donc une purge de la totalité de l'additif liquide fourni par la ligne de remplissage dans la ligne de purge. Tout sur-remplissage est de ce fait impossible et le remplissage de la poche est garanti visuellement par l'écoulement d'additif liquide dans la ligne de purge.

Bien entendu, une fois ce remplissage réalisé, la poche aura encore la possibilité de subir une déformation élastique pour absorber les dilatations de fluide en température ou en phase de gel (AdBlue). De même, des logements aménagés dans le carter permettront d'absorber ces variations de volume sans dégradation du carter.

L'étape de remplissage décrite précédemment peut s'envisager de différentes manières. Il est par exemple envisageable de disposer une cuve de remplissage en hauteur et ainsi de remplir la poche par simple gravité. Néanmoins, il peut s'avérer plus simple d'avoir recours à une pompe qui pourra être :
- soit une pompe spécifique embarquée sur véhicule, ce qui ne paraît pas être une solution optimisée d'un point de vue économique mais évite aux concessions de s'équiper d'un dispositif de pompage ;
- soit une pompe en concession, ce qui paraît être le système optimal ;
- soit la pompe d'alimentation du système de traitement SCR (durant l'étape de remplissage, le fonctionnement de la pompe devra être inversé, par exemple en inversant son sens de rotation).

De façon préférentielle, le procédé de remplissage comprend une étape consistant à purger la poche souple avant de la raccorder à la ligne de remplissage, l'étape de purge étant de préférence réalisée à l'aide d'une pompe. Ces dispositions permettent le remplissage d'une poche totalement vide et donc d'obtenir une concentration et une qualité optimales de l'additif liquide, et permettent notamment le respect des dates de péremption du fluide.

De toute façon l'invention sera bien comprise à l'aide de la description qui suit en référence au dessin schématique annexé représentant, à titre d'exemples non limitatifs, plusieurs formes d'exécution de ce système de réduction catalytique sélective.
Figure 1 est une vue schématique d'un système de réduction catalytique sélective selon l'invention.
Figure 2 est une vue éclatée en perspective d'un réservoir selon un deuxième mode de réalisation de l'invention.
Figure 3 est une vue éclatée en perspective d'un réservoir selon un troisième mode de réalisation de l'invention.
Figure 4 est une vue éclatée de côté d'un réservoir selon un quatrième mode de réalisation de l'invention.
Figure 5 est une vue éclatée en perspective d'un réservoir selon un cinquième mode de réalisation de l'invention.
Figure 6 est une vue schématique illustrant un procédé de remplissage du réservoir du système de réduction catalytique sélective de la figure 1.
Figure 7 est une vue schématique d'un système de réduction catalytique sélective selon une première variante de réalisation.
Figure 8 est une vue schématique d'un système de réduction catalytique sélective selon une deuxième variante de réalisation.

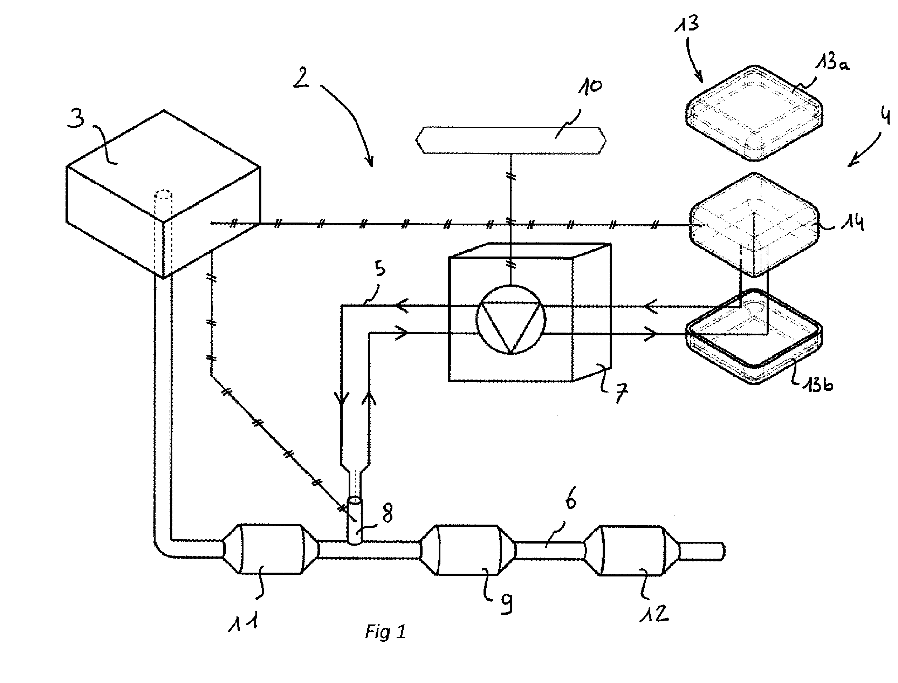

La figure 1 représente schématiquement un système de réduction catalytique sélective 2 destiné au traitement des gaz d'échappement d'un moteur à combustion interne 3 d'un véhicule automobile. Le moteur à combustion interne 3 est de préférence du type Diesel.

Le système de réduction catalytique sélective 2 comprend :
- un réservoir d'additif liquide 4, tel qu'un agent réducteur liquide,
- une ligne d'alimentation en additif liquide 5 agencée pour relier le réservoir d'additif liquide 4 à la ligne d'échappement 6 du moteur 3,
- une pompe doseuse électrique 7 couplée à la ligne d'alimentation 5 et agencée pour amener l'additif liquide du réservoir 4 vers la ligne d'échappement 6 du moteur,
- un dispositif d'injection 8 couplé à la ligne d'alimentation 5 et agencé pour injecter l'additif liquide dans la ligne d'échappement 6 du moteur, et
- un catalyseur à réduction catalytique sélective 9.

Avantageusement, le moteur d'entraînement de la pompe 7 est commandé par un calculateur 10 pour pomper une quantité requise d'additif liquide dans le réservoir d'additif liquide 4.

De préférence, la ligne d'échappement 6 comprend un catalyseur d'oxydation 11 en amont du catalyseur à réduction catalytique sélective 9, et un filtre à particules 12 en aval du catalyseur à réduction catalytique sélective 9. Le catalyseur d'oxydation 11 est en charge du traitement des émissions de monoxyde de carbone, des hydrocarbures et dans une moindre mesure des particules. En fonction des stratégies des constructeurs et de la technologie de filtres à particules utilisée, le filtre à particules 12 pourrait également être localisé en amont du catalyseur à réduction catalytique sélective 9.

Comme montré sur la figure 1, le réservoir d'additif liquide 4 comporte un carter rigide 13 constitué de deux demi-coquilles injectées 13a, 13b assemblées l'une à l'autre, par exemple par vissage ou encliquetage, et une poche souple étanche 14 contenue dans le carter rigide 13. La poche souple 14 constitue une recharge d'additif. Elle peut être placée pleine dans le carter 13 ou bien être placée vide dans ce dernier de manière par exemple à faciliter sa manipulation en réduisant sa masse. La poche souple 14 peut alors par exemple être remplie une fois monté sur véhicule par les protocoles décrits ci-après.

Le fond de la poche souple 14 repose sur le fond du carter 13. La surface de fond du carter 13 est avantageusement plane et lisse afin d'éviter d'abraser la poche souple 14, en particulier lors de vibrations.

Le carter 13 protège la poche souple 14 et est destiné à être fixé à la caisse du véhicule, de préférence dans une zone à température modérée, tel qu'en sous-caisse, ou dans une joue d'aile avant ou encore dans le coffre, voire dans l'habitacle du véhicule.

La poche souple 14 est de préférence réalisée en matière thermoplastique par moulage par soufflage.

La poche souple 14 comporte un goulot équipé de moyens de raccordement à la ligne d'alimentation en additif liquide 5.

Les moyens de raccordement comportent un clapet auto-obturant 15 possédant un embout de type ordinaire, ici à crans "en sapin", par lequel le clapet est emmanché en force dans le goulot de la poche. Le clapet 15 garantit l'absence de pertes d'additif avant montage de la poche 14 sur véhicule, durant les phases de manipulation et de transport, ou après démontage de la poche 14 sur véhicule pour son remplacement dans l'hypothèse où la poche est remplacée.

Le clapet auto-obturant 15 peut avantageusement être surmoulé sur la poche souple 14. Selon une variante de réalisation de l'invention, la poche peut être moulée « sur » le clapet auto-obturant 15, le moule de soufflage se refermant sur ce dernier.

Il convient de noter que la pompe doseuse électrique 7 ainsi que sa carte de gestion électronique pouvant être logées dans le carter 13 ou déportées en d'autres emplacements.

Selon une variante de réalisation de l'invention, le carter 13 pourrait être réalisé par moulage par soufflage simultanément à la poche souple 14.

Selon une autre variante de réalisation de l'invention, le clapet auto-obturant 15 pourrait être remplacé par un robinet de fermeture.

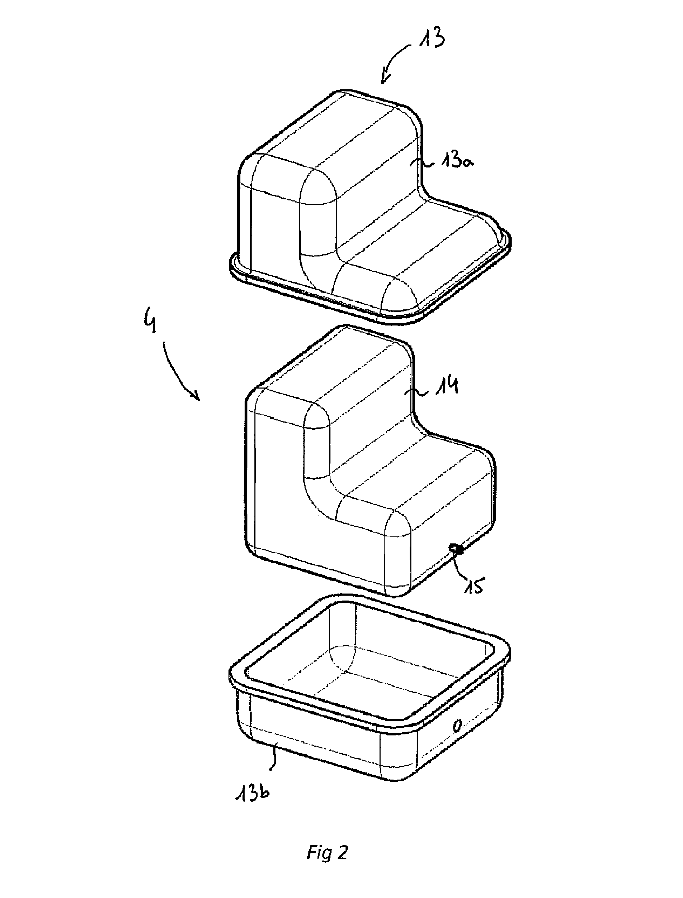

La figure 2 représente une variante de réalisation du réservoir 4 qui diffère de celle représentée sur la figure 1 essentiellement en ce que la poche souple 14 et le carter 13 présentent sensiblement une forme de L.

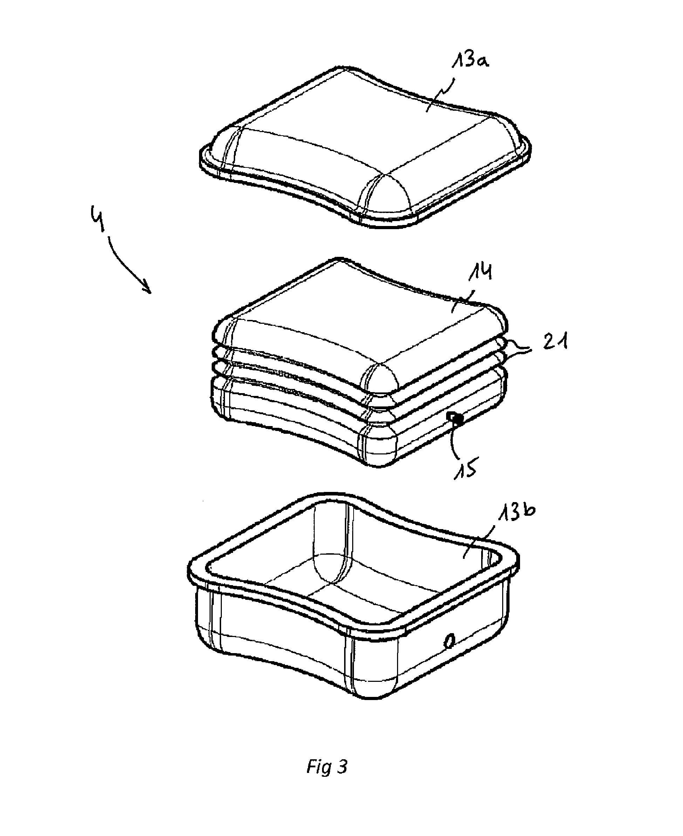

La figure 3 représente une variante de réalisation du réservoir 4 qui diffère de celle représentée sur la figure 1 essentiellement en ce que la paroi latérale de la poche souple 14 comprend des plis 21 et forme un soufflet permettant de maîtriser la déformation de la poche souple lors de sa vidange.

Avantageusement, les parois latérales de la poche 14 et du carter 13 présentent un profil incurvé. Cette configuration des parois latérales de la poche 14 et du carter 13 participe au maintien de la poche lors des phases de sollicitation notamment mécaniques (vibrations, pentes et dévers, ...). A noter que des géométries de ce type et divers types de bossages, y compris sur les surfaces planes principales, sont également envisageables pour encore augmenter la stabilité de la poche.

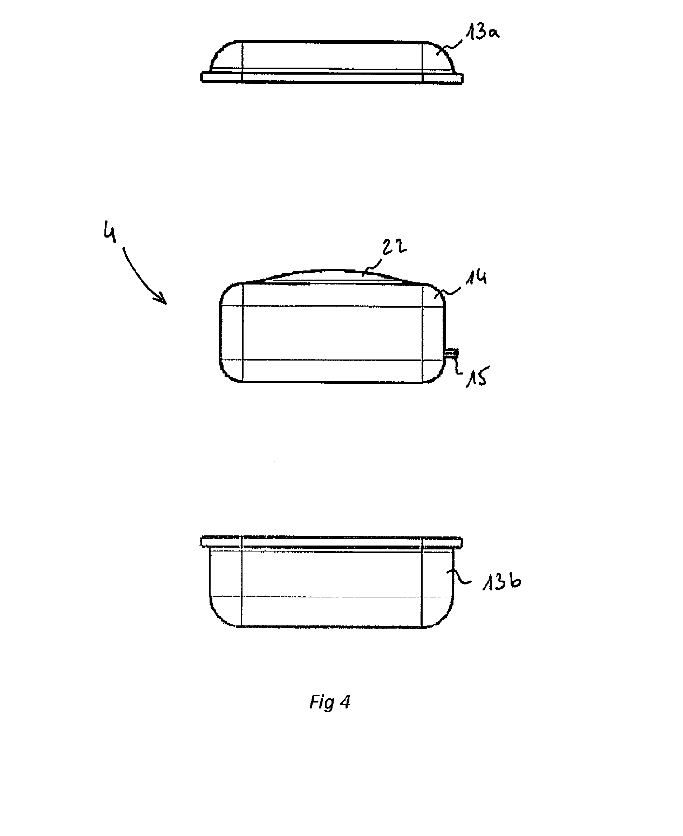

La figure 4 représente une variante de réalisation du réservoir 4 qui diffère de celle représentée sur la figure 1 essentiellement en ce que la poche souple 14 comprend, dans sa partie supérieure, un renflement 22 agencé pour piéger d'éventuelles vapeurs d'additif liquide (vapeurs d'ammoniac, d'eau, ...) qui ne seront ainsi pas aspirées par la pompe puisant en partie basse de la poche.

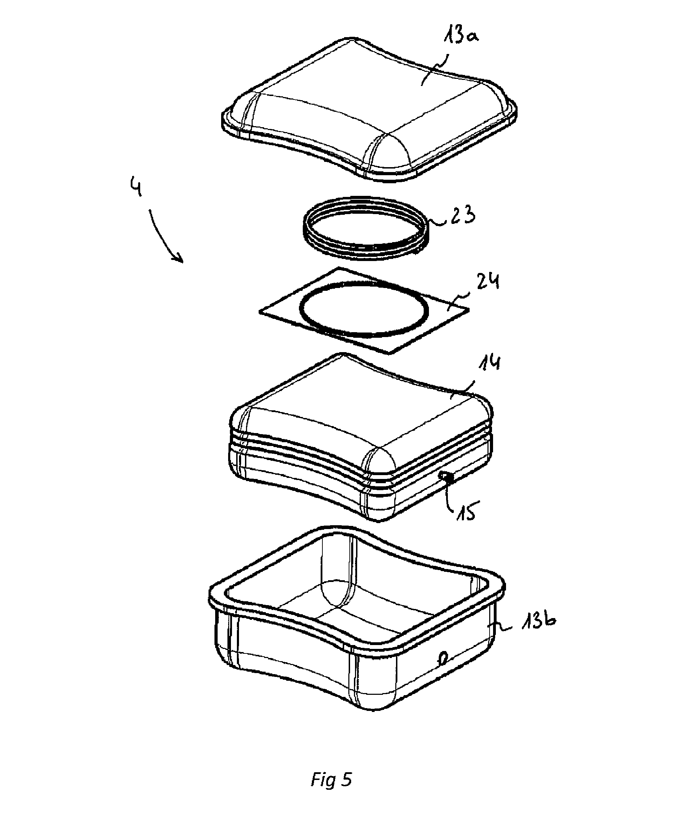

La figure 5 représente une variante de réalisation du réservoir 4 qui diffère de celle représentée sur la figure 3 essentiellement en ce que le réservoir d'additif liquide 4 comprend des moyens de compression agencés pour exercer une pression sur la poche souple 14.

Les moyens de compression comportent de préférence un ressort hélicoïdal de compression 23. Ce ressort 23 exerce une pression sur la poche 14 préférentiellement par le biais d'une plaque support 24 située entre le ressort et la poche qui permettra d'harmoniser l'effort de poussée du ressort sur la surface supérieure de la poche 14 et ainsi de permettre une déformation régulière et contrôlée de la poche lors de sa vidange.

Les autres avantages induits par cette configuration sont :
- la pression exercée par le ressort 23 sur la poche 14 induit une pression au niveau du fluide qui limite fortement la génération de vapeurs dans la poche ;
- la possibilité de maintenir une pression en amont de la pompe 7, et donc d'éviter que la pression dans cette partie du circuit soit à l'atmosphère ou en légère dépression lors de la vidange de la poche.

En fonction des configurations, les moyens de compression peuvent comporter plusieurs ressorts 23 conçus pour exercer une pression sur une ou plusieurs plaques 24. Avantageusement, des clips peuvent être aménagés dans la demi-coquille supérieure 13a du carter 13 et sur la plaque support 24 pour fixer le ressort 23.

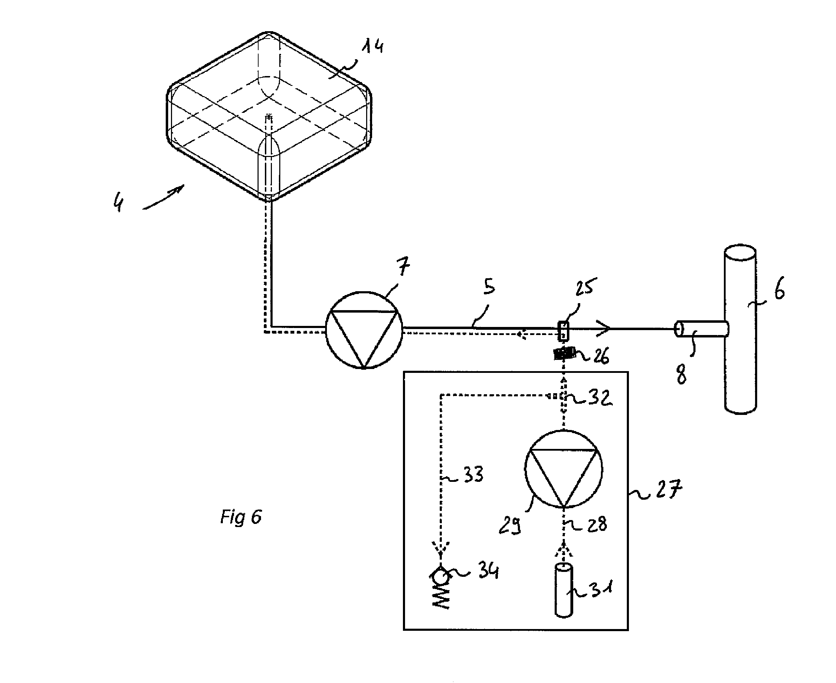

La figure 6 illustre un procédé de remplissage du réservoir 4 (dont seule la poche souple 14 est représentée) selon un premier mode de mise en oeuvre. Un tel procédé de remplissage est adapté pour contrôler parfaitement le volume de liquide introduit dans la poche souple 14.

Le procédé de remplissage comprend les étapes suivantes :
- équiper la ligne d'alimentation 5 de moyens de raccordement, tel qu'un raccord 3 voies 25 dont l'une des voies est reliée à une portion de ligne terminée par exemple par un raccord auto-obturant 26,
- connecter un ensemble de remplissage 27 à la ligne d'alimentation 5 par l'intermédiaire des moyens de raccordement 25, 26, l'ensemble de remplissage 27 comportant une ligne de remplissage en additif liquide 28 munie avantageusement d'un embout adapté pour être inséré dans le raccord auto-obturant 26, une pompe 29 couplée à la ligne de remplissage 28 et reliée à un fût 31 contenant l'additif liquide, et de préférence un raccord 3 voies 32 monté sur la ligne de remplissage 28 en aval de la pompe 29 et adapté pour relier la ligne de remplissage à une ligne de dérivation 33 reliée à une ligne de purge (non représentée sur les figures) par un clapet de décharge 34,

- remplir la poche souple d'additif liquide,
- dévier vers la ligne de purge la totalité de l'additif liquide fourni par la ligne de remplissage 28, lorsque la pression dans la ligne atteint une valeur de seuil prédéterminée, c'est-à-dire une pression adaptée pour déplacer le clapet de décharge 34 dans sa position d'ouverture.

De préférence, le raccord auto-obturant 26 est positionné dans un endroit facilement accessible pour y raccorder l'ensemble de remplissage 27.

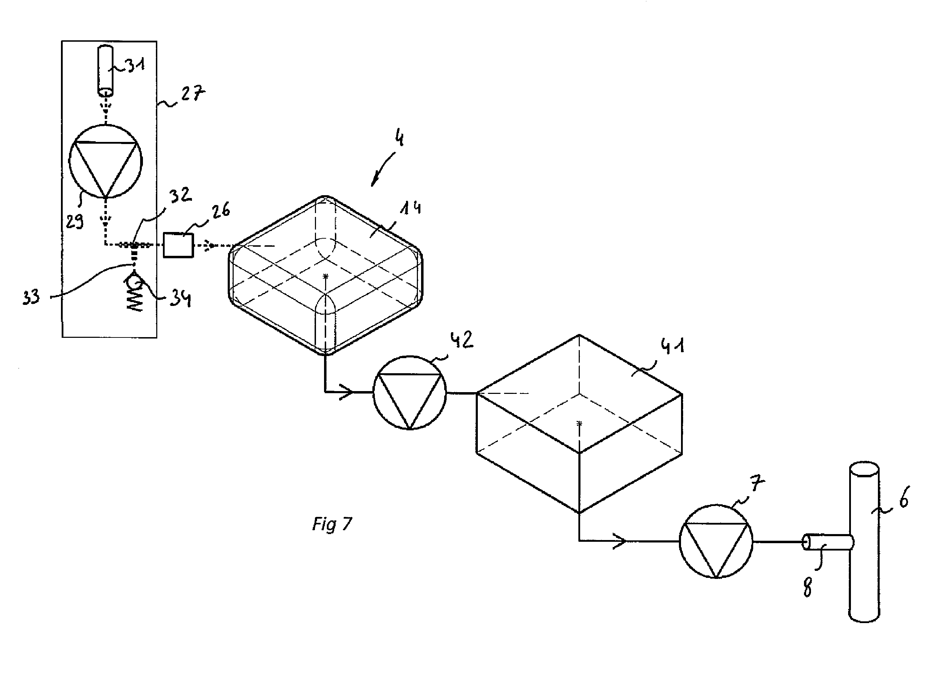

La figure 7 représente un système de réduction catalytique sélective 2 qui diffère de celui représenté sur la figure 1 essentiellement en ce qu'il est équipé de deux réservoirs, à savoir un réservoir principal 4 (dont seule la poche souple 14 est représentée) et un réservoir secondaire 41 associé à des moyens de chauffage (non représentés sur la figure), le réservoir secondaire 41 pouvant être souple ou rigide. Cette configuration est particulièrement intéressante dans le cas d'utilisation d'un agent réducteur soumis au gel (par exemple de l'AdBlue®). Le réservoir secondaire 41 est préférentiellement de faible volume pour optimiser sa conception et son coût. Il est envisageable alors de prévoir une pompe spécifique 42 très simple entre les deux réservoirs qui aura simplement vocation à transférer (par exemple à chaque démarrage et après chaque coupure moteur), de l'agent réducteur du réservoir principal 4 au réservoir secondaire 41. Avantageusement, le réservoir secondaire 41 comporte des moyens de détection de niveau haut agencés pour stopper la pompe 42 et le transfert d'agent réducteur lorsque le niveau de liquide dans le réservoir secondaire 41 a atteint une valeur prédéterminée.

Il convient de noter que le procédé de remplissage du réservoir principal 4 diffère de celui représenté sur la figure 6 en ce que l'ensemble de remplissage 27 est directement raccordé à la poche souple 14.

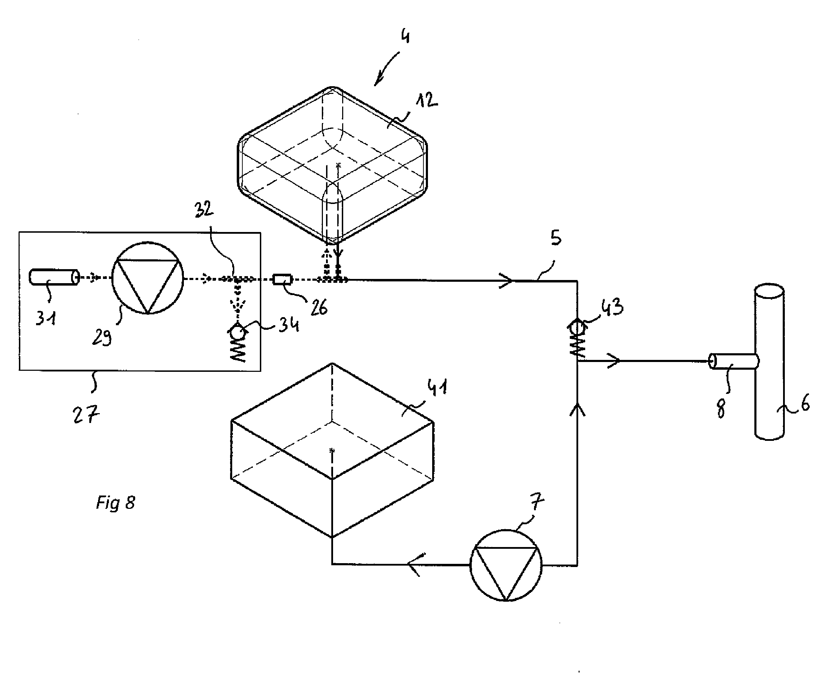

La figure 8 représente un système de réduction catalytique sélective 2 qui diffère de celui représenté sur la figure 7 essentiellement en ce qu'il ne comporte pas de pompe spécifique pour le transfert d'agent réducteur du réservoir principal 4 vers le réservoir secondaire 41. En effet, selon ce mode de réalisation, la pompe d'alimentation principale 7 est utilisée (par exemple en inversant son sens de rotation) pour remplir le réservoir secondaire 41. Un clapet anti-retour 43 évite alors le reflux d'agent réducteur du réservoir secondaire 41 vers le réservoir principal 4 lorsque la pompe d'alimentation 7 fonctionne de manière à alimenter la ligne d'échappement en agent réducteur.

Comme il va de soi, l'invention ne se limite pas aux formes d'exécution de ce système de réduction catalytique sélective, décrites ci-dessus à titre d'exemples, elle en embrasse au contraire toutes les variantes de réalisation.

## Revendications

1. Réservoir d'additif liquide (4) pour système de réduction catalytique sélective (2) destiné au traitement des gaz d'échappement d'un moteur à combustion interne (3) d'un véhicule, **caractérisé en ce qu'**il comprend un carter rigide (13) délimitant un logement, et une poche souple (14) étanche montée dans le logement du carter et destinée à contenir l'additif liquide, la poche souple étant agencée pour être reliée à la ligne d'échappement (6) du moteur.

2. Réservoir d'additif liquide selon la revendication 1, **caractérisé en ce que** la poche souple (14) est réalisée en matière thermoplastique par moulage par soufflage.

3. Réservoir d'additif liquide selon la revendication 2, **caractérisé en ce que** le carter (13) est réalisé par moulage par soufflage simultanément à la poche souple (14).

4. Réservoir d'additif liquide selon la revendication 1, **caractérisé en ce que** la poche souple (14) est réalisée à partir de deux films souples soudés l'un à l'autre ou à partir de deux demi-coquilles souples soudées l'une à l'autre, les deux demi-coquilles étant réalisée de préférence par injection ou thermoformage.

5. Réservoir d'additif liquide selon l'une des revendications 1 à 4, **caractérisé en ce que** la poche souple (14) comporte un goulot équipé de moyens de raccordement (14) à une ligne d'alimentation en additif liquide (5) du système de réduction catalytique sélective (2).

6. Réservoir d'additif liquide selon la revendication 5, **caractérisé en ce que** les moyens de raccordement comportent un clapet auto-obturant (15) ou un robinet de fermeture.

7. Réservoir d'additif liquide selon l'une des revendications 1 à 6, **caractérisé en ce qu'**il comprend des moyens de compression agencés pour exercer une pression sur la poche souple (14), les moyens de compression comportant de préférence un ressort de compression (23).

8. Réservoir d'additif liquide selon l'une des revendications 1 à 7, **caractérisé en ce que** la poche souple (14) comprend dans sa partie supérieure un renflement (22) agencé pour piéger d'éventuelles vapeurs d'additif liquide.

9. Système de réduction catalytique sélective (2) destiné au traitement des gaz d'échappement d'un moteur à combustion interne (3) d'un véhicule, **caractérisé en ce qu'**il comprend un réservoir (4) selon l'une des revendications 1 à 8.

10. Système de réduction catalytique sélective selon la revendication 9, **caractérisé en ce qu'**il comprend en outre :
- une ligne d'alimentation en additif liquide (5) agencée pour relier la poche souple (14) à la ligne d'échappement (6) du moteur,
- un dispositif d'injection (8) couplé à la ligne d'alimentation et agencé pour injecter l'additif liquide dans la ligne d'échappement du moteur, et
- un catalyseur à réduction catalytique sélective (9).

11. Système de réduction catalytique sélective selon la revendication 10, **caractérisé en ce qu'**il comprend une pompe (7) couplée à la ligne d'alimentation (5) et agencée pour amener l'additif liquide de la poche souple (14) vers la ligne d'échappement (6) du moteur.

12. Procédé de remplissage d'un réservoir (4) selon l'une des revendications 1 à 8, **caractérisé en ce qu'**il comprend les étapes consistant à :
- relier la poche souple (14) à une ligne de remplissage en additif liquide (28),
- remplir la poche souple (14) d'additif liquide,
- mesurer la pression à l'intérieur de la poche souple ou dans la ligne de remplissage,
- dévier vers une ligne de purge la totalité de l'additif liquide fourni par la ligne de remplissage, lorsque la pression mesurée atteint une valeur de seuil prédéterminée.

13. Procédé de remplissage selon la revendication 12, **caractérisé en ce qu'**il comprend une étape consistant à prévoir un clapet de décharge (34) entre la ligne de purge et la ligne de remplissage (28), le clapet de décharge étant mobile entre une position de fermeture dans laquelle la ligne de purge et la ligne de remplissage sont isolées fluidiquement afin de permettre le remplissage de la poche souple et une position d'ouverture dans laquelle la ligne de purge et la ligne de remplissage sont reliées fluidiquement, le clapet étant conçu pour être déplacé automatiquement dans sa position d'ouverture lorsque la pression à l'intérieur de la poche souple ou dans la ligne de remplissage atteint la valeur de seuil prédéterminée.

14. Procédé de remplissage selon la revendication 12 ou 13, **caractérisé en ce qu'**il comprend une étape consistant à purger la poche souple (14) avant de la raccorder à la ligne de remplissage (28), l'étape de purge étant de préférence réalisée à l'aide d'une pompe.
